# EUROPÄISCHE PATENTANMELDUNG

(11) **EP 1 972 494 A1**
(43) Veröffentlichungstag der Anmeldung: **24.09.2008**
(21) Anmeldenummer: 07450205.5
(22) Anmeldetag: 22.11.2007
(51) Int. Cl.: B60P 7/08

(54) **Vorrichtung zur Festlegung eines Festlegungselements zur Sicherung eines Gegenstands an einer Ladefläche eines Transportfahrzeugs**

(30) Priorität: 19.03.2007 AT 1682007 U
(71) Anmelder: Pongratz Trailer-Group GmbH, 8712 Proleb (AT)
(72) Erfinder: Pongratz, Herwig, 8712 Proleb (AT)
(74) Vertreter: Miksovsky, Alexander

(57) **Zusammenfassung**

Bei einer Vorrichtung (6) zur Festlegung wenigstens eines Festlegungselements (7) zur Sicherung wenigstens eines zu transportierenden Gegenstands (8) an einer Ladefläche (4) eines Transportfahrzeugs (1), insbesondere eines Anhängers, wobei die Ladefläche (4) auf einem Fahrgestell des Transportfahrzeugs (1) festgelegt ist, ist vorgesehen, daß die Vorrichtung (6) von einem bügelartigen Element (9) gebildet ist, welches durch die Ladefläche (4) durch auf die Abmessungen des bügelartigen Elements (9) abgestimmte Durchbrechungen (10) einsetzbar ist und an der von einer Aufnahmeebene bzw. -fläche der Ladefläche (4) für den zu transportierenden Gegenstand (8) abgewandten Seite an der Ladefläche (4) gesichert festlegbar ist und an welchem das Festlegungselement (7) anordenbar bzw. festlegbar ist.

Darüber hinaus wird eine mit wenigstens einer derartigen Vorrichtung versehene Ladefläche (4) zur Verfügung gestellt, welche Durchbrechungen (10) zur Aufnahme wenigstens einer derartigen Vorrichtung (6) zur Festlegung wenigstens eines Festlegungselements (7) zur Sicherung wenigstens eines zu transportierenden Gegenstands (8) aufweist.

## Beschreibung

Die vorliegende Erfindung bezieht sich auf eine Vorrichtung zur Festlegung wenigstens eines Festlegungselements zur Sicherung wenigstens eines zu transportierenden Gegenstands an einer Ladefläche eines Transportfahrzeugs, insbesondere eines Anhängers, wobei die Ladefläche auf einem Fahrgestell des Transportfahrzeugs festgelegt ist. Die Erfindung bezieht sich weiters auf eine Ladefläche eines Transportfahrzeugs, insbesondere eines Anhängers, zum Transport wenigstens eines Gegenstands, wobei die Ladefläche auf einem Fahrgestell des Transportfahrzeugs festgelegt ist.

Im Zusammenhang mit der Sicherung von Gegenständen auf einer Ladefläche eines Transportfahrzeugs, beispielsweise eines Anhängers, sind unterschiedliche Ausführungsformen bekannt. So ist beispielsweise aus der US-A 4,072,113 bekannt, im Bereich von seitlichen bzw. am Umfang angeordneten Begrenzungswänden einer Ladefläche an der Oberseite Haken oder dgl. vorzusehen, an welchen band- bzw. gurtartige Festlegungselemente zur Sicherung von auf der Ladefläche zu transportierenden Gegenständen vorgesehen sind. Eine derartige Sicherung von Gegenständen bei Anordnung von Verankerungseinrichtungen an der oberen Kante von Begrenzungswänden kann jedoch nur erfolgen, falls die zu transportierenden und zu sichernden Gegenstände zumindest die gleiche Höhe wie die Begrenzungswände aufweisen und vorzugsweise höher sind, um durch an den Verankerungseinrichtungen festzulegenden Festlegungselementen eine zuverlässige Verankerung und Sicherung der zu transportierenden Gegenstände zu gewährleisten.

Aus der US-A 5,340,250 ist eine abgewandelte Ausführungsform bekannt geworden, wobei an einer Ladefläche, welche keinerlei Begrenzungswände aufweist, am Außenumfang Verankerungseinrichtungen zur Festlegung von wiederum band- bzw. gurtähnlichen Festlegungselementen zur Sicherung von zu transportierenden Gegenständen vorgesehen sind. Aufgrund der Tatsache, daß die Verankerungseinrichtungen am Außenumfang einer derartigen Ladefläche vorgesehen sind, ist unmittelbar einsichtig, daß eine derartige Ladefläche keinerlei Begrenzungswände aufweisen kann.

Aus der DE-U 20 2005 020 805 ist eine weitere abgewandelte Ausführungsform bekannt geworden, wobei an einer Ladefläche auf zu transportierende Behälter und insbesondere Schienen bzw. Flansche in einem Seitenbereich der Behälter abgestimmte Verankerungseinrichtungen vorgesehen sind, wobei unmittelbar einsichtig ist, daß derartige Verankerungseinrichtungen nur mit speziell ausgebildeten Behältern zusammenwirken können und eine zuverlässige Festlegung von von einem derartigen Behälter abweichenden, zu transportierenden Gegenständen über die vorgesehenen Verankerungseinrichtungen nicht möglich ist.

Die vorliegende Erfindung zielt darauf ab, eine Vorrichtung zur Festlegung wenigstens eines Festlegungselements zur Sicherung wenigstens eines zu transportierenden Gegenstands an einer Ladefläche eines Transportfahrzeugs sowie eine Ladefläche eines derartigen Transportfahrzeugs dahingehend weiterzubilden, daß die oben erwähnten Nachteile vermieden werden und insbesondere eine einfache und zuverlässige Festlegung von wenigstens einem zu transportierenden Gegenstand an einer Ladefläche eines Transportfahrzeugs möglich wird.

Zur Lösung dieser Aufgaben ist eine Vorrichtung der eingangs genannten Art im wesentlichen dadurch gekennzeichnet, daß die Vorrichtung von einem bügelartigen Element gebildet ist, welches durch die Ladefläche durch auf die Abmessungen des bügelartigen Elements abgestimmte Durchbrechungen einsetzbar ist und an der von einer Aufnahmeebene bzw. -fläche der Ladefläche für den zu transportierenden Gegenstand abgewandten Seite an der Ladefläche gesichert festlegbar ist und an welchem das Festlegungselement anordenbar bzw. festlegbar ist. Dadurch, daß erfindungsgemäß die Vorrichtung von einem bügelartigen Element gebildet ist, wird sichergestellt, daß mit einer einfach herstellbaren Vorrichtung das Auslangen gefunden wird, wobei eine derartige Vorrichtung auch entsprechend kostengünstig und auf den Einsatzzweck abgestimmt herstellbar ist. Darüber hinaus läßt sich die erfindungsgemäß vorgesehene, bügelartige Vorrichtung auch in einfacher Weise auf einer Ladefläche positionieren und für eine Sicherung eines zu transportierenden Gegenstands durch wenigstens ein daran festlegbares Festlegungselement anordnen.

Gemäß einer bevorzugten Ausführungsform ist erfindungsgemäß vorgesehen, daß das bügelartige Element zwischen einer Position zur Festlegung wenigstens eines zu transportierenden Gegenstands, in welchem es über die Oberfläche der Aufnahmeebene bzw. -fläche der Ladefläche insbesondere zur Aufnahme des Festlegungselements vorragt, und einer Ruheposition verstellbar bzw. verlagerbar ist, in welcher das bügelartige Element im wesentlichen bündig mit der Aufnahmeebene bzw. -fläche der Ladefläche ist bzw. an dieser anliegt. Dadurch wird es möglich, die erfindungsgemäße Vorrichtung in einfacher Weise in eine Betriebsstellung zu bringen, in welcher eine einfache und zuverlässige Festlegung wenigstens eines Festlegungselements möglich wird. Darüber hinaus wird für den Fall, daß die erfindungsgemäße Vorrichtung nicht zur Sicherung eines zu transportierenden Gegenstands auf der Ladefläche herangezogen werden soll, sichergestellt, daß eine im wesentlichen ebene Ladefläche im gesamten Ausmaß zur Verfügung steht, ohne Beschränkungen durch die Positionierung wenigstens einer erfindungsgemäßen Vorrichtung zur Verankerung eines zu transportierenden Gegenstands unterworfen zu sein.

Für eine besonders einfache Anordnung bzw. Festlegung des Festlegungselements an der erfindungsgemäßen Vorrichtung ist darüber hinaus bevorzugt vorgesehen, daß das bügelartige Element in einer Seitenansicht abgewinkelt ausgebildet ist und in der Stellung zur Sicherung wenigstens eines festzulegenden Gegenstands in Richtung zum Inneren der Ladefläche geneigt ist bzw. vorragt. Dadurch, daß erfindungsgemäß in der Betriebsstellung das die erfindungsgemäße Vorrichtung bildende, bügelartige Element in Richtung zum Inneren der Ladefläche geneigt ist bzw. vorragt, wird auch eine zuverlässige Aufnahme der zur Festlegung wenigstens eines zu sichernden Gegenstands aufzunehmenden Kräfte ermöglicht.

Für eine besonders einfache Herstellung, welche dennoch die Aufnahme auch großer Kräfte ermöglicht, wird darüber hinaus vorgeschlagen, daß das bügelartige Element aus Metall, insbesondere Stahl, hergestellt ist, wie dies einer weiters bevorzugten Ausführungsform der erfindungsgemäßen Vorrichtung entspricht.

Zur zuverlässigen und einfachen Festlegung der erfindungsgemäßen Vorrichtung wird darüber hinaus bevorzugt vorgeschlagen, daß das bügelartige Element über eine Verschraubung oder Vernietung an der Ladefläche sicherbar bzw. festlegbar ist. Eine derartige Verschraubung oder Vernietung ist auch fähig, gegebenenfalls auftretenden, rauhen Einsatzbedingungen der erfindungsgemäßen Vorrichtung zu widerstehen.

Für eine ordnungsgemäße Festlegung sowie zur Aufnahme gegebenenfalls hoher Kräfte bzw. Belastungen, welche insbesondere bei der Sicherung von schweren, zu transportierenden Gegenständen bzw. Lasten auftreten können, ist gemäß einer weiters bevorzugten Ausführungsform vorgesehen, daß das bügelartige Element zusätzlich an einem die Ladefläche begrenzenden Rahmen- bzw. Flanschelement und/oder Bordwandelement gesichert ist bzw. dieses durchdringt. Durch ein Anordnen des erfindungsgemäßen, bügelartigen Elements an einem die Ladefläche begrenzenden Rahmen- bzw. Flanschelement können zuverlässig hohe Kräfte aufgenommen werden, da ein derartiges Rahmen- bzw. Flanschelement beispielsweise aus einem eine entsprechend höhere Festigkeit bzw. Widerstandskraft aufweisenden, metallischen Element ausgebildet ist, während gegebenenfalls die Ladefläche aus leichteren und weniger widerstandsfähigen Materialien, wie beispielsweise Holzbrettern, welche gegebenenfalls verkleidet sind, gebildet sein kann.

Zur zuverlässigen Sicherung bzw. Festlegung wenigstens eines zu sichernden Gegenstands und zur Ermöglichung einer Anpassung an unterschiedliche Einsatzzwecke ist darüber hinaus vorgesehen, daß ein Festlegungselement zur Sicherung wenigstens eines zu transportierenden Gegenstands in an sich bekannter Weise von einem Gurt, einem Band, einer Kette oder dgl. gebildet ist, wie dies einer weiters bevorzugten Ausführungsform der erfindungsgemäßen Vorrichtung entspricht.

Um zu verhindern, daß bei Nichtgebrauch eines Festlegungselements dieses dennoch unverändert mitgeführt werden muß, wird darüber hinaus gemäß einer weiters bevorzugten Ausführungsform vorgeschlagen, daß das Festlegungselement lösbar, beispielsweise über einen Haken, an der Vorrichtung festlegbar ist.

Zur Lösung der eingangs genannten Aufgaben ist darüber hinaus eine Ladefläche eines Transportfahrzeugs, insbesondere eines Anhängers, zum Transport wenigstens eines Gegenstands, wobei die Ladefläche auf einem Fahrgestell des Transportfahrzeugs festgelegt ist, im wesentlichen dadurch gekennzeichnet, daß die Ladefläche Durchbrechungen zur Aufnahme wenigstens einer Vorrichtung zur Festlegung wenigstens eines Festlegungselements zur Sicherung wenigstens eines zu transportierenden Gegenstands gemäß der Erfindung oder einer bevorzugten Ausführungsform davon aufweist. Wie oben bereits erwähnt, gelingt somit in einfacher und zuverlässiger Weise eine Anordnung wenigstens einer erfindungsgemäßen Vorrichtung zur Sicherung wenigstens eines zu transportierenden Gegenstands.

Für eine Anpassung an gegebenenfalls unterschiedliche Größen wenigstens eines zu transportierenden Gegenstands und/oder für eine gleichmäßige Verteilung von bei der Sicherung des Gegenstands auftretenden Kräften wird gemäß einer weiters bevorzugten Ausführungsform vorgeschlagen, daß an der Ladefläche eine Mehrzahl von Vorrichtungen zur Festlegung eines Festlegungselements zur Sicherung wenigstens eines zu transportierenden Gegenstands anordenbar bzw. festlegbar ist.

Zur Erhöhung der Freiheit beim Positionieren eines zu transportierenden Gegenstands auf der Ladefläche wird darüber hinaus vorgeschlagen, daß wenigstens eine Vorrichtung zur Festlegung eines Festlegungselements zur Sicherung wenigstens eines zu transportierenden Gegenstands im Bereich eines Seitenrands der Ladefläche vorgesehen ist, wie dies einer weiters bevorzugten Ausführungsform einer erfindungsgemäßen Ladefläche entspricht. Insbesondere bei größere Abmessungen aufweisenden Ladeflächen kann somit beispielsweise eine Mehrzahl von erfindungsgemäßen Vorrichtungen im Bereich der jeweiligen Seitenränder der Ladefläche vorgesehen sein.

Um bei Nichtverwendung der wenigstens einen erfindungsgemäßen Vorrichtung zur Sicherung eines Festlegungselements eine im wesentlichen ebene, vollflächige Ladefläche zur Verfügung zu stellen, wird darüber hinaus bevorzugt vorgeschlagen, daß die Aufnahmeebene bzw. -fläche der Ladefläche im Bereich der Durchbrechungen zur Aufnahme jeweils einer Vorrichtung zur Festlegung eines Festlegungselements abgesetzt bzw. vertieft ausgebildet ist, wobei die Tiefe der Vertiefung im wesentlichen der Materialstärke des bügelartigen Elements der Vorrichtung zur Festlegung eines Festlegungselements entspricht.

Die Erfindung wird nachfolgend anhand von in der beiliegenden Zeichnung schematisch dargestellten Ausführungsbeispielen näher erläutert. In dieser zeigen:
Fig. 1 eine schematische Draufsicht auf eine Ausführungsform einer erfindungsgemäßen Ladefläche eines von einem Anhänger gebildeten Transportfahrzeugs, auf welcher eine Mehrzahl von erfindungsgemäßen Vorrichtungen zur Festlegung wenigstens eines Festlegungselements zur Sicherung wenigstens eines zu transportierenden Gegenstands vorgesehen ist;
Fig. 2 in vergrößertem Maßstab eine Ausführungsform eines bügelartigen Elements der erfindungsgemäßen Vorrichtung, wobei Fig. 2a eine Vorderansicht einer erfindungsgemäßen Vorrichtung und Fig. 2b eine Seitenansicht der erfindungsgemäßen Vorrichtung darstellt;
Fig. 3 in wiederum gegenüber Fig. 1 vergrößertem Maßstab die Anordnung einer erfindungsgemäßen Vorrichtung an einer erfindungsgemäßen Ladefläche, wobei Fig. 3a die Ruheposition der erfindungsgemäßen Vorrichtung und Fig. 3b die Betriebslage der erfindungsgemäßen Vorrichtung zur Sicherung wenigstens eines zu transportierenden Gegenstands zeigt;
Fig. 4 in einer zu der Darstellung gemäß Fig. 3b ähnlichen Darstellung eine Teilansicht einer abgewandelten Ausführungsform einer erfindungsgemäßen Ladefläche mit einer erfindungsgemäßen Vorrichtung; und
Fig. 5 in einer zu Fig. 4 ähnlichen Darstellung eine weitere abgewandelte Ausführungsform einer erfindungsgemäßen Ladefläche mit einer erfindungsgemäßen Vorrichtung.

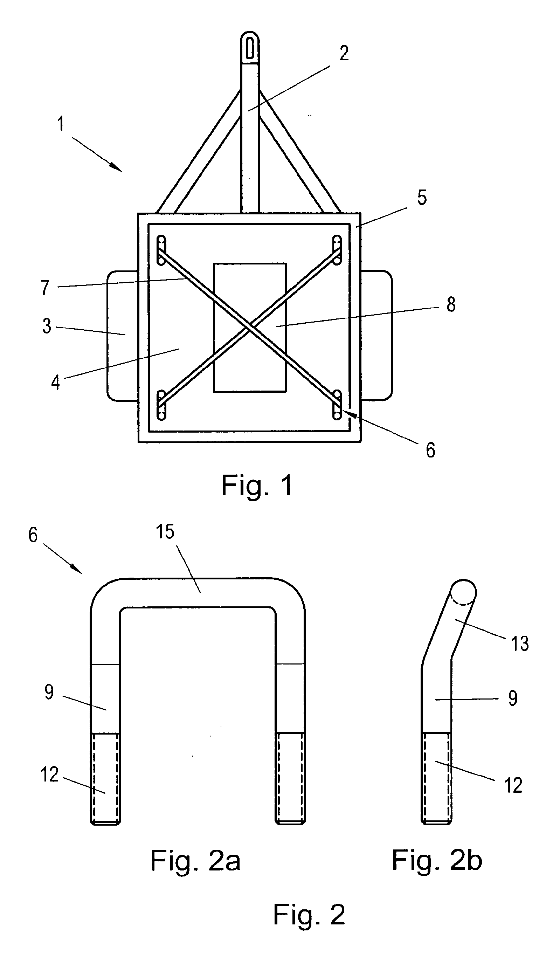

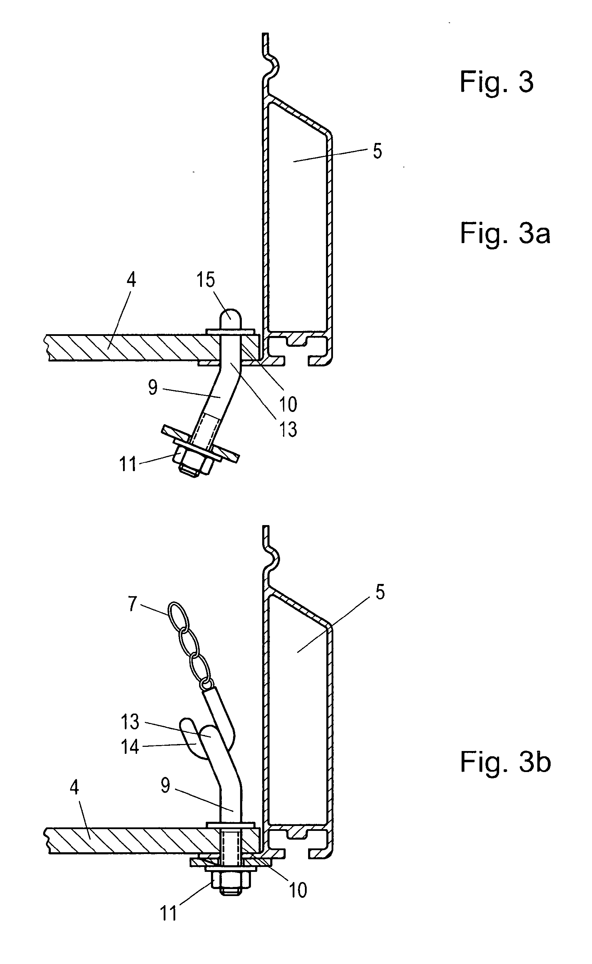

In Fig. 1 ist allgemein mit 1 ein Anhänger als ein Transportfahrzeug bezeichnet, wobei eine Deichsel für eine Verbindung mit einem nicht näher gezeigten Zugfahrzeug mit 2 angedeutet ist. Darüber hinaus sind Radkästen 3 angedeutet. Eine mit 4 bezeichnete Ladefläche ist in für einen Fachmann bekannter Weise auf einem nicht näher dargestellten Fahrwerk eines derartigen Anhängers bzw. Transportfahrzeugs 1 festgelegt, wobei, wie insbesondere aus Fig. 3 noch deutlicher ersichtlich, am Umfang der Ladefläche 4 Begrenzungswände 5 vorgesehen bzw. angeordnet sind.

Im Bereich der Ladefläche 4 ist in Fig. 1 schematisch eine Mehrzahl von allgemein mit 6 bezeichneten Vorrichtungen zur Festlegung jeweils wenigstens eines band- bzw. gurtartigen Festlegungselements 7 zur Sicherung eines schematisch mit 8 angedeuteten, auf der Ladefläche 4 zu transportierenden Gegenstands angedeutet. Die Vorrichtungen 6 zur Festlegung wenigstens eines Festlegungselements 7 werden unter Bezugnahme auf die nachfolgenden Figuren im Detail erörtert.

In Fig. 2 ist ersichtlich, daß die Vorrichtungen 6 jeweils von einem bügelartigen Element 9 gebildet sind, wobei, wie dies in Fig. 3 im Detail dargestellt ist, das bügelartige Element 9 jeweils entsprechende Durchbrechungen bzw. Öffnungen 10 in der Ladefläche 4 durchdringt und an der Ladefläche 4 über eine Verschraubung 11 gesichert ist, wobei ein Gewinde in Fig. 2 mit 12 angedeutet ist.

Wie aus der Darstellung gemäß Fig. 2b sowie 3a und 3b ersichtlich, ist das bügelartige Element 9 abgewinkelt, wobei ein abgewinkelter Bereich 13 in an der Ladefläche 4 montierter Position in Richtung zum Inneren der Ladefläche 4 vorragt, wie dies insbesondere aus der in Fig. 3b gezeigten Betriebslage ersichtlich ist. Durch den in Richtung zum Inneren abgewinkelten Teilbereich 13 des bügelartigen Elements 9 wird selbst bei unmittelbarer Anordnung im Bereich des Seitenrands der Ladefläche 4 und somit in unmittelbarer Nähe zu einer Begrenzungswand 5 eine zuverlässige und sichere Festlegung eines wiederum mit 7 bezeichneten Festlegungselements ermöglicht. Darüber hinaus kann eine zuverlässige und sichere Aufnahme von Kräften bei der Sicherung bzw. Festlegung eines zu transportierenden Gegenstands durch die abgewinkelte Ausführungsform erzielt werden, wie dies durch den gespannten Zustand des Festlegungselements 7 in Fig. 3b angedeutet ist.

Für eine einfache und sichere Festlegung des Festlegungselements 7 an dem bügelartigen Element 9 ist darüber hinaus ein Haken 14 angedeutet.

In der in Fig. 3a dargestellten Ruheposition ist das bügelartige Element 9 aus der in Fig. 3b dargestellten, vorragenden Betriebsposition zurückgezogen bzw. fällt unter seinem eigenen Gewicht in eine an der Ladefläche 4 anliegende Stellung, so daß, wie aus Fig. 3a ersichtlich, eine im wesentlichen ebene Ladefläche durch die bündige Anordnung des Querträgers 15 des bügelartigen Elements 9 an der Ladefläche 4 erzielbar ist.

Für eine vollständig ebene Ladefläche auch im Bereich der Vorrichtungen 6 bzw. der bügelartigen Elemente 9 kann vorgesehen sein, daß die Ladefläche 4 im Bereich der Durchbrechungen 10 zur Aufnahme der Vorrichtungen 6 bzw. bügelartigen Elemente 9 mit einer entsprechenden Vertiefung ausgebildet ist, wobei die Tiefe der Vertiefungen der Materialstärke insbesondere des Querträgers bzw. -balkens 15 entspricht.

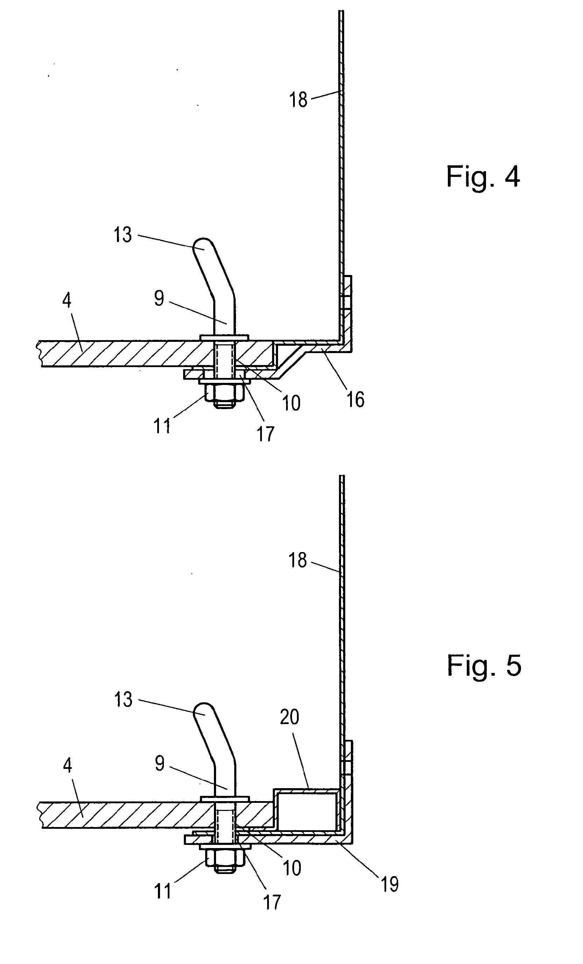

Bei der Ausführungsform gemäß Fig. 4 ist ersichtlich, daß im Rahmen- bzw. Umfangsbereich der Ladefläche 4 ein Flanschelement 16 vorgesehen ist, wobei das Flanschelement 16 im Bereich der Festlegung des wiederum mit 9 bezeichneten, bügelartigen Elements wie die Ladefläche 10 mit einer Durchbrechung bzw. Bohrung 17 versehen ist, um eine sichere Festlegung des bügelartigen Elements zu ermöglichen. Das Flanschelement 16 ist in der in Fig. 4 dargestellten Ausführungsform abgewinkelt ausgebildet und dient neben einer Sicherung des bügelartigen Elements 9 sowie einer Begrenzung der Ladefläche 4 auch zur Anlenkung einer mit 18 bezeichneten Bord- bzw. Seitenwandkonstruktion.

Bei der weiteren abgewandelten Ausführungsform gemäß Fig. 5 ist ähnlich wie bei der Ausführungsform gemäß Fig. 4 am Umfangsbereich der Ladefläche 4 ein Flanschelement 19 vorgesehen, welches zur weiteren Erhöhung der Festigkeit bzw. Steifigkeit mit einem Hohlprofil 20 kombiniert ist. Ebenso wie bei der Ausführungsform gemäß Fig. 4 dient die Flansch- bzw. Rahmenkonstruktion 19 gemeinsam mit dem Hohlprofil 20 sowohl zur Festlegung des bügelartigen Elements 9 als auch zur Anordnung der Ladefläche 4.

Durch die in den Ausführungsformen gemäß Fig. 4 und 5 vorgesehenen Flansch- bzw. Rahmenkonstruktionen und/oder Bordwand 16 sowie 18, 19 und 20 kann eine Aufnahme hoher Kräfte über die bügelartigen Elemente 9 erfolgen, da diese Flansch- bzw. Rahmenelemente und/oder die Bordwand 16, 18, 19 und 20 beispielsweise aus einem Metall hergestellt sind. Demgegenüber kann die Ladefläche 4 von eine geringere Festigkeit aufweisenden Elementen, wie beispielsweise Holzbrettern, gebildet sein.

Wie aus Fig. 1 ersichtlich, kann eine Mehrzahl von Vorrichtungen 6, welche jeweils von einem bügelartigen Element 9 gebildet sind, im Bereich der Seitenränder der Ladefläche 4 vorgesehen sein. Entsprechend gegebenenfalls zu transportierenden Gegenständen können auch beispielsweise im Bereich der in Längsrichtung vorderen und rückwärtigen Begrenzungsränder der Ladefläche 4 entsprechende Vorrichtungen 6 vorgesehen bzw. angeordnet sein.

Zur Aufnahme entsprechender Kräfte sind die Vorrichtungen 6 bzw. bügelartigen Elementen 9 aus einem entsprechend widerstandsfähigen Material, beispielsweise Metall, insbesondere Stahl oder Aluminium, hergestellt.

Anstelle des in der Zeichnung dargestellten Anhängers 1 kann die Ladefläche 4 auch unmittelbar auf einem mit einem entsprechenden Antriebs versehenen Transportfahrzeug ausgebildet bzw. vorgesehen sein.

Darüber hinaus kann vorgesehen sein, daß an jeder Vorrichtung 6 bzw. jedem bügelartigen Element jeweils eine Mehrzahl von Festlegungselementen 7 angreift bzw. insbesondere lösbar festlegbar ist.

## Patentansprüche

1. Vorrichtung zur Festlegung wenigstens eines Festlegungselements (7) zur Sicherung wenigstens eines zu transportierenden Gegenstands (8) an einer Ladefläche (4) eines Transportfahrzeugs (1), insbesondere eines Anhängers, wobei die Ladefläche (4) auf einem Fahrgestell des Transportfahrzeugs (1) festgelegt ist, **dadurch gekennzeichnet, daß** die Vorrichtung (6) von einem bügelartigen Element (9) gebildet ist, welches durch die Ladefläche (4) durch auf die Abmessungen des bügelartigen Elements (9) abgestimmte Durchbrechungen (10) einsetzbar ist und an der von einer Aufnahmeebene bzw. -fläche der Ladefläche (4) für den zu transportierenden Gegenstand (8) abgewandten Seite an der Ladefläche (4) gesichert festlegbar ist und an welchem das Festlegungselement (7) anordenbar bzw. festlegbar ist.

2. Vorrichtung nach Anspruch 1, **dadurch gekennzeichnet, daß** das bügelartige Element (9) zwischen einer Position (Fig. 3b) zur Festlegung wenigstens eines zu transportierenden Gegenstands, in welchem es über die Oberfläche der Aufnahmeebene bzw. -fläche der Ladefläche (4) insbesondere zur Aufnahme des Festlegungselements (7) vorragt, und einer Ruheposition (Fig. 3a) verstellbar bzw. verlagerbar ist, in welcher das bügelartige Element (9) im wesentlichen bündig mit der Aufnahmeebene bzw. -fläche der Ladefläche (4) ist bzw. an dieser anliegt.

3. Vorrichtung nach Anspruch 2, **dadurch gekennzeichnet, daß** das bügelartige Element (9) in einer Seitenansicht abgewinkelt ausgebildet ist und in der Stellung zur Sicherung wenigstens eines festzulegenden Gegenstands (8) in Richtung zum Inneren der Ladefläche (4) geneigt ist bzw. vorragt.

4. Vorrichtung nach Anspruch 1, 2 oder 3, **dadurch gekennzeichnet, daß** das bügelartige Element (9) aus Metall, insbesondere Stahl, hergestellt ist.

5. Vorrichtung nach einem der Ansprüche 1 bis 4, **dadurch gekennzeichnet, daß** das bügelartige Element (9) über eine Verschraubung (12) oder Vernietung an der Ladefläche (4) sicherbar bzw. festlegbar ist.

6. Vorrichtung nach einem der Ansprüche 1 bis 5, **dadurch gekennzeichnet, daß** das bügelartige Element (9) zusätzlich an einem die Ladefläche (4) begrenzenden Rahmen- bzw. Flanschelement und/oder Bordwandelement (16, 18, 19) gesichert ist bzw. dieses durchdringt.

7. Vorrichtung nach einem der Ansprüche 1 bis 6, **dadurch gekennzeichnet, daß** ein Festlegungselement (7) zur Sicherung wenigstens eines zu transportierenden Gegenstands (8) in an sich bekannter Weise von einem Gurt, einem Band, einer Kette oder dgl. gebildet ist.

8. Vorrichtung nach einem der Ansprüche 1 bis 7, **dadurch gekennzeichnet, daß** das Festlegungselement (7) lösbar, beispielsweise über einen Haken (14), an der Vorrichtung festlegbar ist.

9. Ladefläche eines Transportfahrzeugs (1), insbesondere eines Anhängers, zum Transport wenigstens eines Gegenstands (8), wobei die Ladefläche (4) auf einem Fahrgestell des Transportfahrzeugs (1) festgelegt ist, **dadurch gekennzeichnet, daß** die Ladefläche (4) Durchbrechungen (10) zur Aufnahme wenigstens einer Vorrichtung (6, 9) zur Festlegung wenigstens eines Festlegungselements (7) zur Sicherung wenigstens eines zu transportierenden Gegenstands (8) gemäß einem der Ansprüche 1 bis 8 aufweist.

10. Ladefläche nach Anspruch 9, **dadurch gekennzeichnet, daß** an der Ladefläche (4) eine Mehrzahl von Vorrichtungen (6, 9) zur Festlegung eines Festlegungselements (7) zur Sicherung wenigstens eines zu transportierenden Gegenstands (8) anordenbar bzw. festlegbar ist.

11. Ladefläche nach Anspruch 9 oder 10, **dadurch gekennzeichnet, daß** wenigstens eine Vorrichtung (6, 9) zur Festlegung eines Festlegungselements (7) zur Sicherung wenigstens eines zu transportierenden Gegenstands (8) im Bereich eines Seitenrands der Ladefläche (4) vorgesehen ist.

12. Ladefläche nach einem der Ansprüche 9, 10 oder 11, **dadurch gekennzeichnet, daß** die Aufnahmeebene bzw. -fläche der Ladefläche (4) im Bereich der Durchbrechungen (10) zur Aufnahme jeweils einer Vorrichtung (6, 9) zur Festlegung eines Festlegungselements (7) abgesetzt bzw. vertieft ausgebildet ist, wobei die Tiefe der Vertiefung im wesentlichen der Materialstärke des bügelartigen Elements (9) der Vorrichtung (6) zur Festlegung eines Festlegungselements (7) entspricht.
